# DEMANDE DE BREVET EUROPEEN

(11) **EP 2 814 130 A1**
(43) Date de publication de la demande: **17.12.2014**
(21) Numéro de dépôt: 13172061.7
(22) Date de dépôt: 14.06.2013
(51) Int. Cl.: H02J 3/38, H02J 13/00, H04B 3/54, H04B 3/56

(54) **Installation électrique avec module passerelle améliorée**

(71) Demandeur: Belenos Clean Power Holding AG, 2502 Bienne (CH)
(72) Inventeur: La désignation de l'inventeur n'a pas encore été déposée
(74) Mandataire: Giraud, Eric

(57) **Abrégé**

La présente invention concerne un module passerelle pour un réseau électrique, ledit module passerelle étant apte à recevoir un signal de puissance comprenant une composante modulée pour véhiculer des informations d'un module électrique produisant de l'électricité et apte à traiter ce signal de puissance pour fournir audit réseau électrique un signal compatible, ledit module passerelle comprenant une unité principale comportant un circuit de commande pilotant des moyens d'interface pour gérer les informations de la composante modulée du signal de puissance et un circuit de filtrage pour filtrer cette composante modulée.

## Description

La présente invention concerne un module passerelle pour un réseau électrique, une installation. Le module passerelle est apte à recevoir un signal de puissance comprenant une composante modulée pour véhiculer des informations d'un module électrique produisant de l'électricité et apte à traiter ce signal de puissance pour fournir audit réseau électrique un signal compatible, ledit module passerelle comprenant une unité principale comportant un circuit de commande pilotant un circuit de lecture pour lire les informations de la composante modulée et un circuit de filtrage pour filtrer cette composante modulée de sorte à fournir au réseau électrique un signal compatible.

### ARRIERE PLAN TECHNOLOGIQUE

La présente invention concerne le domaine des installations électriques pour un réseau domestique et en particuliers des installations électriques utilisant des énergies renouvelables.

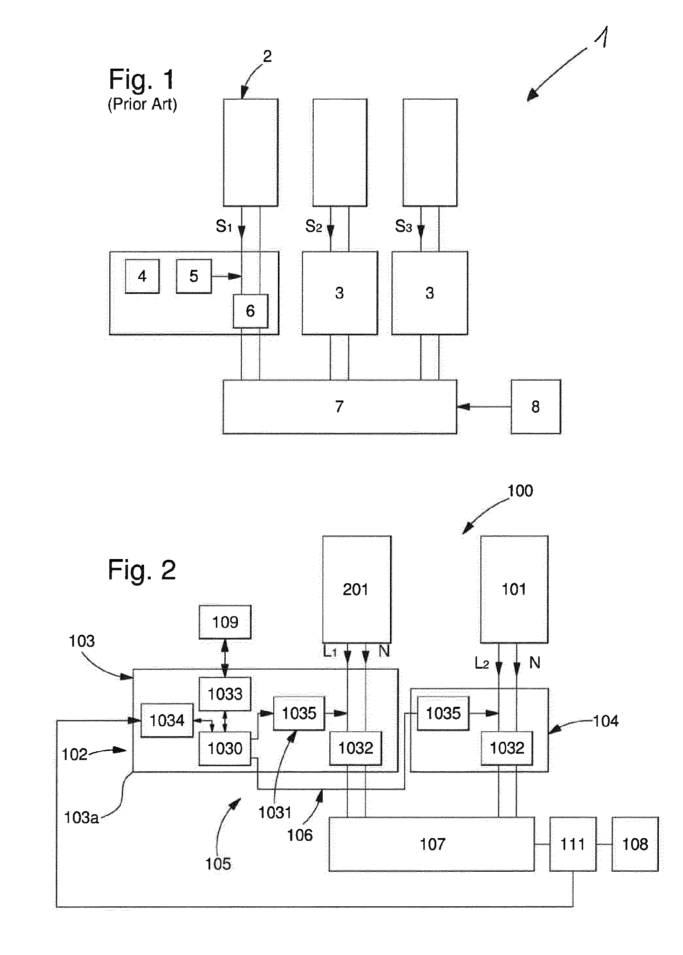

Une telle installation 1, visible à la figure 1, comprend généralement un réseau domestique connecté au réseau électrique public et à des systèmes 2 générant de l'électricité à partir des énergies renouvelables comme des éoliennes ou des panneaux solaires. Ces systèmes peuvent comprendre un module solaire ou un module éolien. Ces systèmes générant de l'électricité à partir des énergies renouvelables sont munis d'un micro-onduleur de sorte à fournir un signal en sortie compatible avec le réseau domestique. Ce signal S1 est envoyé à une unité passerelle 3. Ce signal S1 comprend une composante modulée permettant l'échange d'informations entre les systèmes générant de l'électricité à partir des énergies renouvelables et l'unité passerelle.

Cette unité passerelle 3 est utilisée pour lire les données de la composante modulée et pour ensuite la filtrer afin que le signal de sortie soit débarrassé de toutes imperfections avant d'être injecté dans le réseau domestique. Cette unité comprend donc un filtre 6, un circuit de lecture 5 et un circuit de commande 4 pour commander le tout.

Dans l'art antérieur, si les systèmes générant de l'électricité à partir des énergies renouvelables comprennent une pluralité de modules, alors chaque module fournit un signal de puissance S1, S2, S3 et est associé à une unité passerelle 3.

L'inconvénient de cette configuration est qu'elle nécessite d'avoir une unité passerelle par module. Comme chaque unité passerelle comprend un filtre, un circuit de lecture et un circuit de commande, la multiplication du nombre de module et donc du nombre d'unité passerelle entraîne une hausse des coûts.

### RESUME DE L'INVENTION

L'invention a pour but de fournir un module passerelle d'un réseau électrique qui est moins coûteux, modulable et plus compact.

A cet effet, l'invention concerne un module passerelle pour un réseau électrique, ledit module passerelle étant apte à recevoir un signal de puissance comprenant une composante modulée pour véhiculer des informations d'un module électrique produisant de l'électricité et apte à traiter ce signal de puissance pour fournir audit réseau électrique un signal compatible, ledit module passerelle comprenant une unité principale comportant un circuit de contrôle pilotant des moyens d'interface pour gérer les informations de la composante modulée du signal de puissance et un circuit de filtrage pour filtrer cette composante modulée, **caractérisé en ce que** ledit module passerelle comprend en outre au moins une unité secondaire munie d'un circuit de filtrage pour traiter le signal de puissance fournit par un module électrique supplémentaire et agencée pour que les moyens d'interface puissent gérer les informations de la composante modulée du signal de puissance fournit par le module électrique supplémentaire, ladite au moins une unité secondaire étant commandée par le circuit de contrôle de l'unité principale.

Dans un mode de réalisation avantageux, chaque unité secondaire traite le signal de puissance d'un module électrique supplémentaire, chaque unité secondaire étant commandé par le circuit de contrôle de l'unité principale.

Dans un mode de réalisation avantageux, le module électrique est composée d'une pluralité de cellule fournissant chacune de l'électricité.

Dans un mode de réalisation avantageux, chaque module électrique comprend en outre un micro-onduleur pour fournir le signal de puissance.

Dans un mode de réalisation avantageux, les moyens d'interface comprennent un circuit de communication sur l'unité principale et un circuit de communication par unité secondaire.

Dans un mode de réalisation avantageux, les moyens d'interface comprennent des éléments de couplage passif permettant de faire la connexion entre le circuit de contrôle et au moins une ligne de phase et une ligne du neutre d'un module électrique lié à l'unité principale ou à une unité secondaire.

Dans un mode de réalisation avantageux, les moyens d'interface comprennent des éléments de couplage passif inductif ou des éléments de couplage passif capacitif ou une combinaison d'éléments de couplage passif inductif et d'éléments de couplage passif capacitif.

Dans un mode de réalisation avantageux, les moyens d'interface comprennent une pluralité d'éléments de couplage inductif comportant chacun une bobine du primaire couplée par induction à une première bobine du secondaire connectée électriquement à la ligne de phase et à la ligne du neutre d'un module électrique, et à une seconde bobine du secondaire, la bobine du primaire étant connectée à la seconde bobine du primaire de l'unité principale ou de l'unité secondaire précédente alors que la seconde bobine du secondaire est connectée à la bobine du primaire de l'unité secondaire suivante, l'élément de couplage inductif étant agencé pour que la bobine du primaire soit connecté au circuit de contrôle.

Dans un mode de réalisation avantageux, les moyens d'interface comprennent une pluralité d'éléments de couplage capacitif agencés sur chaque unité secondaire, chaque élément de couplage capacitif comportant une première capacité connectée entre une première borne de connexion et la ligne de phase du module électrique supplémentaire lié à ladite unité secondaire ainsi qu'une seconde capacité connectée entre une seconde borne de connexion et la ligne de neutre du module électrique supplémentaire, les premières bornes de connexion des unités secondaires étant reliées entre elles et reliées à la ligne de phase du module électrique lié à l'unité principale, les secondes bornes de connexion des unités secondaires étant reliées entre elles et reliées à la ligne de neutre du module électrique lié à l'unité principale, le circuit de contrôle comprenant un coupleur de phase connecté par une première de ses bornes aux premières bornes de connexion des unités secondaires et par une seconde de ses bornes aux secondes bornes de connexion des unités secondaires.

Dans un mode de réalisation avantageux, chaque unité secondaire est connecté électriquement à l'unité principale.

Dans un mode de réalisation avantageux, le module électrique est un module solaire.

Dans un mode de réalisation avantageux, le module électrique est un module éolien.

### BREVE DESCRIPTION DES FIGURES

Les buts, avantages et caractéristiques du module passerelle pour une installation selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figure 1 représente de manière schématique une installation avec un module passerelle selon l'art antérieur;
- la figure 2 représente de manière schématique un premier mode de réalisation de l'installation avec un module passerelle selon l'invention;
- la figure 3 représente de manière schématique un agencement particulier de l'installation avec un module passerelle selon l'invention;
- la figure 4 représente de manière schématique une première variante d'un second mode de réalisation de l'installation avec un module passerelle selon l'invention;
- la figure 5 représente de manière schématique une seconde variante d'un second mode de réalisation de l'installation avec un module passerelle selon l'invention;

### DESCRIPTION DETAILLEE

La présente invention procède de l'idée générale inventive qui consiste à avoir un réseau électrique alimenté par des modules électriques, le tout étant géré par un module passerelle modulable, bon marché et plus compact.

Sur la figure 2, une installation 100 est représentée. Cette installation 100 comprend un réseau électrique comme un réseau domestique 107. Ce réseau domestique 107 est premièrement connecté au réseau électrique public 108. Ce réseau domestique 107 est également connecté à au moins un module électrique 101. Ce module électrique 101 est un module produisant de l'électricité comme par exemple un module solaire ou éolien ou électrochimique ou hydroélectrique. Ce module électrique 101 est composé d'une pluralité de cellules produisant de l'électricité. Par exemple si le module électrique est un module solaire, on considèrera que le module est un panneau solaire composé d'une multitude de cellules photovoltaïques. Bien entendu, il est envisageable qu'un module électrique 101 comprennent plusieurs panneaux solaires ou éoliennes montés en série, cela dépend de la puissance admissible par module électrique 101.

Chaque module électrique 101 comprend en outre un micro-onduleur 101a. Le micro-onduleur 101a est utilisé pour rendre compatible le signal fournit par le module électrique 101. Ce micro-onduleur 101a est utilisé afin de fourni un signal de puissance Si en sortie du module électrique 101 à travers une ligne de phase Li et une ligne de neutre N. Ce signal de puissance Si comprend une composante modulée. Cette composante est modulée en fréquence suivant la méthode des courants porteurs de ligne. Cette composante modulée est alors utilisée pour le transport d'informations.

En effet, l'installation 100 comprend en outre un module passerelle 102. Ce module passerelle 102 est un module utilisé pour adapter le signal de puissance Si avec sa composante modulée au réseau domestique.

Pour cela, le module passerelle 102 comprend une première unité passerelle ou unité principale 103. Cette unité principale 103 comprend un circuit de contrôle 1030 qui commande des moyens d'interface 1031 pour gérer les informations de la composante modulée et un circuit de filtrage 1032 pour filtrer cette composante modulée de sorte à fournir au réseau électrique un signal compatible : L'unité principal 103 comprend en outre un circuit de transmission de données 1033 utilisant par exemple le format Ethernet et qui est utilisé pour la récolte des informations ou le diagnostic à distance. Ce circuit de transmission de données 1033 communique par exemple avec un élément portable 109 comme une tablette ou un téléphone et faisant office de télécommande. L'unité principal 103 comprend également un circuit d'interface de lecture d'information 1034 auquel est relié un compteur d'énergie 111 disposé entre le réseau domestique 107 et le réseau électrique public 108 afin de connaître la puissance actuelle consommée dans la maison, c'est-à-dire par le réseau domestique 107. Cela permet de pouvoir régler la puissance produite par les module électrique 101.

Les informations transmises se divisent en deux types d'informations : d'une part les informations envoyées depuis le module électrique 101 vers l'unité principale 103 du module passerelle 102 et d'autre part les informations reçues par le module électrique 101 depuis l'unité principale 103 du module passerelle 102.

Les informations envoyées depuis le module électrique 101 vers l'unité principale 103 sont des informations concernant l'état des cellules photovoltaïques de sorte que si une ou des cellules venaient à être moins performantes, une information serait envoyée au module passerelle 103 ou un compte rendu des données sera réalisé et mis à dispositions dans le module 101. Par contre, les informations reçues par le module électrique 101 depuis l'unité principale du module passerelle 103 sont des informations du type de configuration ou de commande. En effet, suite à une information venant du module électrique 101 ou par programmation ou suite à une information externe comme la météo, le circuit de contrôle 1030 peut envoyer des informations de commande au module électrique 101. Ces informations peuvent entrainer une coupure de certaines cellules ou une baisse de leurs performances. Un exemple d'information est la consigne de puissance de production du module 101

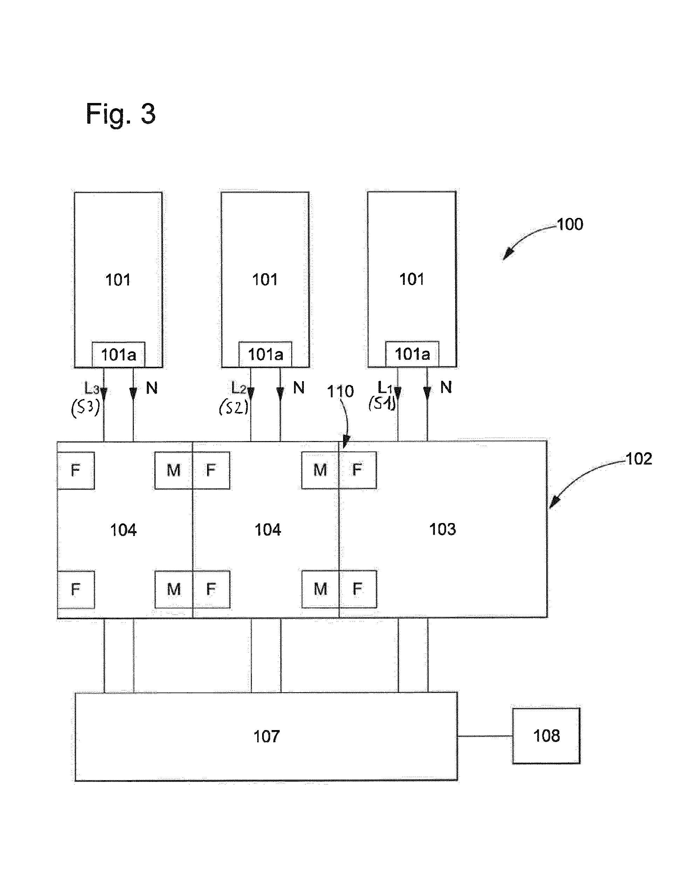

Avantageusement, lorsque l'installation 100 comprend d'autres modules électriques 101, la présente invention prévoit que le module passerelle 102 comprend des unités secondaires 104. En effet, l'unité principale 103 est agencée pour être connectée à un seul module électrique 101 fournissant un signal de puissance S1 porté par la ligne de phase L₁. Or, il est envisageable que plusieurs modules électrique 101 soit utilisés pour alimenter le réseau domestique 107. Ces autres modules électriques fournissant un signal de puissance Si porté par la ligne de phase Li, par exemple le second module électrique 101 fournit un signal de puissance S2 porté par la ligne de phase L₂ alors qu'un troisième module électrique 101 fournit un signal de puissance S3 porté par la ligne de phase L₃ comme visible à la figure 3.

Ces unités secondaires 104 du module passerelle 102 sont connectées chacune à un module électrique 101 c'est à dire que l'unité secondaire reçoit le signal de puissance d'un seul module électrique 101. Chacune de ces unités secondaires 104 sont agencées pour que les moyens d'interface 1031 puissent lire les informations de la composante modulée du signal de puissance Si du module électrique 101 associé. Ces unités secondaires 104 comprennent un circuit de filtrage 1032 pour filtrer la composante modulée du signal de puissance du module électrique 101 associé. Ainsi, si l'installation 100 comprend trois modules électriques 101, le module passerelle 102 comprend une unité principale 103 et deux unités secondaires 104. Les unités secondaires 104 n'ont pas de circuits 1033 et 1034.

On constate donc que ces unités secondaires 104 ne sont pas pourvues d'un circuit de contrôle 1030. En effet, avantageusement selon l'invention, les unités secondaires 104 sont contrôlées par l'unité de contrôle 1030 de l'unité principale 103. Cette unité de contrôle 1030 de l'unité principale 103 commande les moyens d'interfaces 1031 et le circuit de filtrage 1032 de chaque unité secondaire 104.

Cette configuration a l'avantage de réduire drastiquement les coûts tout en ayant un module passerelle 102 plus compact. En effet, le module passerelle 102 selon la présente invention ne comprend qu'une seule unité principale 103 pour une pluralité de modules électriques 101 de sorte qu'il n'y ait qu'un seul circuit de contrôle 1030 par module passerelle 102. Par ailleurs, cette configuration de n'avoir qu'une seule unité avec un circuit de contrôle 1030 qui contrôle toutes les unités permet d'avoir des unités secondaires 104 qui sont plus compactes.

Dans un premier mode de réalisation visible à la figure 3, les moyens d'interface 1031 comprennent un circuit de communication 1035 par unité principale 103 ou secondaire 104. On comprend par-là que l'unité principale 103 comprend un circuit de communication 1035 et que chaque unité secondaire 104 comprend également un circuit de communication 1035. Ces circuits de communication 1035 envoient leurs informations au circuit de contrôle 1030 de l'unité principale 103. Chaque circuit de communication 1035 comprend un transformateur c'est-à-dire une bobine du primaire et une bobine du secondaire, la bobine du primaire étant connectée à un élément de commande alors que la bobine du secondaire est connectée à la ligne de phase Li et à la ligne du neutre N.

Dans un second mode de réalisation, les moyens d'interface 1031 utilisent un couplage passif et notamment des éléments de couplage passif 1031a.

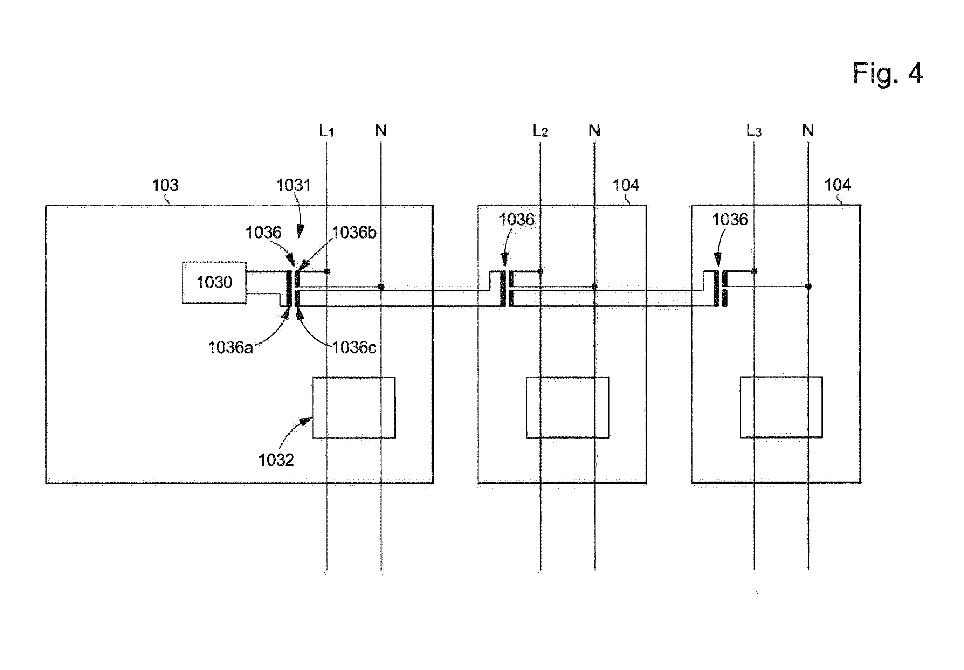

Dans une première variante visible à la figure 4, le couplage passif est inductif. Dans l'unité principale 103, le circuit de contrôle 1030 est connecté à un premier élément de couplage inductif 1036. Ce premier élément de couplage inductif comporte une bobine du primaire 1036a munie de deux bornes de contact et couplée par induction à une première bobine du secondaire 1036b et une seconde bobine du secondaire 1036c. La première bobine du secondaire 1036b est munie de deux bornes de contact afin d'être connectée électriquement à la ligne de phase L₁ et à la ligne du neutre N. La seconde bobine du secondaire 1036c munie de deux bornes de contact afin d'être connectée électriquement un second élément de couplage inductif 1036 situé sur une première unité secondaire 104.

Ce second élément de couplage inductif 1036 de la première unité secondaire 104 comporte une bobine du primaire 1036a connectée à la seconde bobine du secondaire 1036c du premier élément de couplage inductif 1036. Le second élément de couplage inductif 1036 de la première unité secondaire 104 comporte en outre une première bobine du secondaire 1036b et une seconde bobine du secondaire 1036c couplées par induction à la bobine du primaire 1036a.

Chaque unité secondaire 104 est ainsi munie d'un élément de couplage inductif 1036 qui comporte d'une bobine du primaire 1036a couplée par induction à une première bobine du secondaire 1036b et une seconde bobine du secondaire 1036c, la bobine du primaire 1036a étant connectée à la seconde bobine du primaire 1036c de l'unité principale 103 ou secondaire 104 précédente alors que la seconde bobine du secondaire 1036c est connectée à la bobine du primaire 1036 de l'unité secondaire 104 suivante.

Cette variante du coupage passif permet de limiter les coûts et d'avoir des unités secondaires 104 compactes car il n'y a que le circuit de contrôle 1030 du l'unité principale 103 pour commander les différentes éléments de couplage inductif 1036.

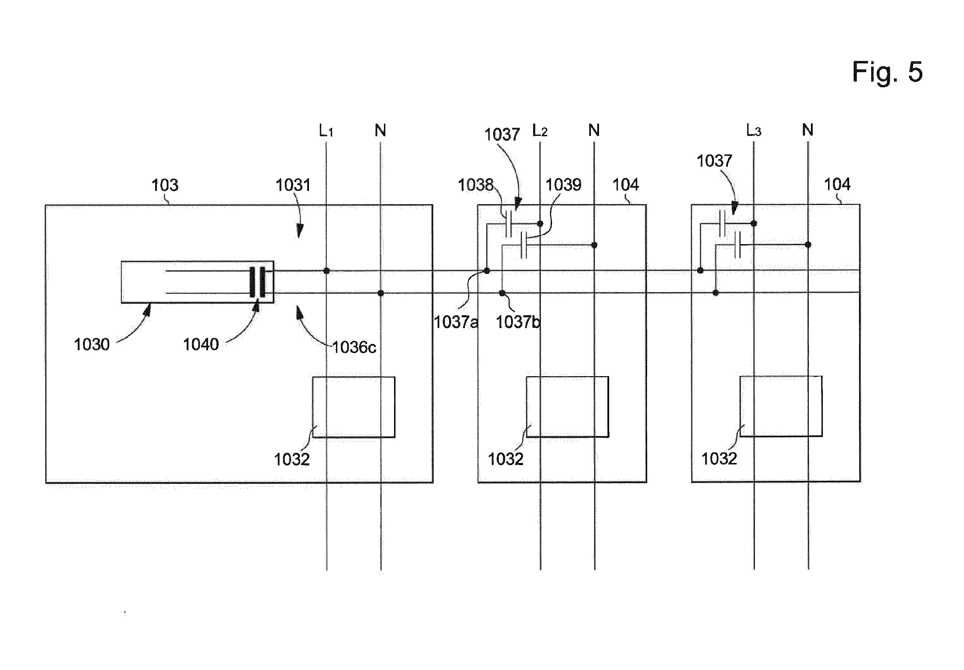

Dans une seconde variante visible à la figure 5, le couplage passif est capacitif. Dans l'unité principale 103, le circuit de contrôle 1030 est connecté électriquement à la ligne de phase L₁ et à la ligne du neutre N du module électrique 101 lié à l'unité principale 103.

Les unités secondaires 104 comportent chacune un élément de couplage capacitif 1037. Cet élément de couplage capacitif 1037 comprend une première capacité 1038 connectée entre une première borne de connexion 1037a et la ligne de phase Li ainsi qu'une seconde capacité 1039 connectée entre une seconde borne de connexion 1037b et la ligne de neutre N. Le tout est agencé pour que les premières bornes de connexion 1037a des unités secondaires 104 soient reliées entre elles et connectées à la ligne de phase L₁ de l'unité principale 103 et pour que les secondes bornes de connexion 1037b des unités secondaires 104 soient reliées entre elles et connectées à la ligne de neutre N de l'unité principale 103.

Afin de d'effectuer un couplage entre les différentes phases, le circuit de contrôle 1030 comprend un coupleur de phase 1040 constitué d'un transformateur c'est-à-dire d'une bobine primaire et d'une bobine secondaire interagissant toutes les deux.

Pour que l'unité de contrôle de l'unité principale 103 puisse communiquer et commander les unités secondaires 104, il est prévu que des moyens de communication 105 soit agencés entre l'unité principale et les unités secondaires.

Dans un premier exemple, les moyens de communication 105 comprennent des moyens de communications sans fil tel qu'un système wifi ou un système Bluetooth® ou WiMax. Ces moyens de communications sans fil permettent d'avoir les unités secondaires 104 et l'unité principale 103 qui sont disposées dans des pièces différentes si l'installation 100 l'exige. De plus, ces moyens de communications sans fil peuvent être utilisés pour envoyer des informations vers un terminal de contrôle pour l'utilisateur. Celui-ci peut alors commander ou surveiller l'installation à distance.

Dans un second exemple, les moyens de communication 105 comprennent des moyens de communication filaires 106 ou physiques c'est-à-dire qu'il y a une connexion physique entre l'unité principale 103 et les unités secondaires 104. Cette solution permet d'avoir une meilleure compacité des unités secondaires 104 car elle ne nécessite pas de circuits spécifiques pour la communication sans fil qui doivent être alimentés.

Astucieusement selon l'invention, il peut être prévu que l'unité principale 103 et les unités secondaires 104 s'emboitent les unes aux autres. Pour cela, ces unités sont intégrées dans un boitier 103a. Ce boitier, de préférence en plastique, est parallélépipédique permettant avantageusement de fixer les différents boitiers entre eux bord à bord comme visible à la figure 3. Cet agencement permet de munir lesdits boitiers d'un système de clipsage 110. Ce système de clipsage 110 est réalisé de sorte à remplir deux fonctions. La première fonction est de solidariser les boitiers entre eux alors que la seconde fonction est d'assurer une connexion électrique. Pour cela, le système de clipsage 110 comprend au moins un élément male (M) et au moins un élément femelle (F) chacun situé sur un bord d'une unité. Dans un exemple particulier, le système de clipsage comprend deux éléments males (M) et deux éléments femelles (F) de sorte à améliorer la solidarisation de deux unités comme visible à la figure 3.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Module passerelle (102) pour une installation électrique (100), ledit module passerelle étant apte à recevoir un signal de puissance (Si) comprenant une composante modulée pour véhiculer des informations d'un module électrique (101) produisant de l'électricité et apte à traiter ce signal de puissance pour fournir à ladite installation (107) un signal compatible, ledit module passerelle comprenant une unité principale (103) comportant un circuit de contrôle (1030) pilotant des moyens d'interface (1031) pour gérer les informations de la composante modulée du signal de puissance (Si) et un circuit de filtrage (1032) pour filtrer cette composante modulée, **caractérisé en ce que** ledit module passerelle (102) comprend en outre au moins une unité secondaire (104) munie d'un circuit de filtrage (1032) pour traiter le signal de puissance (Si) fournit par un module électrique (101) supplémentaire et agencée pour que les moyens d'interface puissent gérer les informations de la composante modulée du signal de puissance (Si) fournit par le module électrique (101) supplémentaire, ladite au moins une unité secondaire étant commandée par le circuit de contrôle (1030) de l'unité principale (103).

2. Module passerelle selon la revendication 1, **caractérisé en ce que** chaque unité secondaire (104) traite le signal de puissance (Si) d'un module électrique (101) supplémentaire, chaque unité secondaire étant commandé par le circuit de contrôle (1030) de l'unité principale (103).

3. Module passerelle selon la revendication 1 ou 2, **caractérisé en ce que** le module électrique (101) est composée d'une pluralité de cellule fournissant chacune de l'électricité.

4. Module passerelle selon la revendication 3, **caractérisé en ce que** chaque module électrique (101) comprend en outre un micro-onduleur (101a) pour fournir le signal de puissance (Si).

5. Module passerelle selon l'une des revendications précédentes, **caractérisé en ce que** les moyens d'interface (1031) comprennent un circuit de communication (1035) sur l'unité principale (103) et un circuit de communication (1035) par unité secondaire (104).

6. Module passerelle selon l'une des revendications 1 à 4, **caractérisé en ce que** les moyens d'interface (1031) comprennent des éléments de couplage passif permettant de faire la connexion entre le circuit de contrôle (1030) et au moins une ligne de phase (Li) et une ligne du neutre (N) d'un module électrique (101) lié à l'unité principale ou à une unité secondaire.

7. Module passerelle selon la revendication 6, **caractérisé en ce que** les moyens d'interface (1031) comprennent des éléments de couplage passif inductif (1036) ou des éléments de couplage passif capacitif (1037) ou une combinaison d'éléments de couplage passif inductif (1036) et d'éléments de couplage passif capacitif (1037).

8. Module passerelle selon la revendication 6 ou 7, **caractérisé en ce que** les moyens d'interface (1031) comprennent une pluralité d'éléments de couplage inductif (1036) comportant chacun une bobine du primaire (1036a) couplée par induction à une première bobine du secondaire (1036b) connectée électriquement à la ligne de phase (Li) et à la ligne du neutre (N) d'un module électrique (101), et à une seconde bobine du secondaire (1036c), la bobine du primaire étant connectée à la seconde bobine du primaire de l'unité principale ou de l'unité secondaire précédente alors que la seconde bobine du secondaire est connectée à la bobine du primaire de l'unité secondaire suivante, l'élément de couplage inductif étant agencé pour que la bobine du primaire soit connecté au circuit de contrôle (1030).

9. Module passerelle selon la revendication 6 ou 7, **caractérisé en ce que** les moyens d'interface (1031) comprennent une pluralité d'éléments de couplage capacitif (1037) agencés sur chaque unité secondaire (104), chaque élément de couplage capacitif comportant une première capacité (1038) connectée entre une première borne de connexion (1037a) et la ligne de phase (Li) du module électrique supplémentaire (101) lié à ladite unité secondaire (104) ainsi qu'une seconde capacité (1039) connectée entre une seconde borne de connexion (1037b) et la ligne de neutre (N) du module électrique supplémentaire (101), les premières bornes de connexion (1037a) des unités secondaires étant reliées entre elles et reliées à la ligne de phase du module électrique (101) lié à l'unité principale (104), les secondes bornes de connexion (1037b) des unités secondaires (104) étant reliées entre elles et reliées à la ligne de neutre (N) du module électrique (101) lié à l'unité principale (103), le circuit de contrôle (1030) comprenant un coupleur de phase (1040) connecté par une première de ses bornes aux premières bornes de connexion (1037a) des unités secondaires et par une seconde de ses bornes aux secondes bornes de connexion (1037b) des unités secondaires.

10. Module passerelle selon l'une des revendications précédentes, **caractérisé en ce que** chaque unité secondaire est connecté à l'unité principale par des moyens de communication filaires (106).

11. Module passerelle selon l'une des revendications précédentes, **caractérisé en ce que** le module électrique est un module solaire.

12. Module passerelle selon l'une des revendications 1 à 10, **caractérisé en ce que** le module électrique est un module éolien.
